Europäisches Patentamt

(19) European Patent Office

Office européen des brevets

(11) Numéro de publication: **0 043 333**
**B1**

(12) ## FASCICULE DE BREVET EUROPEEN

(45) Date de publication du fascicule du brevet:
**22.08.84**

(21) Numéro de dépôt: **81420086.1**

(22) Date de dépôt: **04.06.81**

(51) Int. Cl.³: **B 29 C 27/02,** B 66 F 3/35, A 47 C 27/08

(54) **Procédé de fabrication de coussins souples, étanches et dispositif pour sa mise en oeuvre.**

(30) Priorité: **19.06.80 FR 8013917**

(43) Date de publication de la demande:
**06.01.82 Bulletin 82/1**

(45) Mention de la délivrance du brevet:
**22.08.84 Bulletin 84/34**

(84) Etats contractants désignés:
**AT BE CH DE GB IT LI LU NL SE**

(56) Documents cités:
**DE - A - 2 522 731**
**DE - C - 1 062 004**
**DE - C - 1 098 190**
**DE - C - 1 121 312**
**GB - A - 763 254**
**US - A - 3 671 349**
**US - A - 3 753 819**

(73) Titulaire: **Carre-Pierrat, Jacky, Le Crêt, Domarin F-38300 Bourgoin Jallieu (FR)**

(72) Inventeur: **Carre-Pierrat, Jacky, Le Crêt, Domarin F-38300 Bourgoin Jallieu (FR)**

(74) Mandataire: **Laurent, Michel et al, Bureaux Chalin A1 20, rue Louis Chirpaz Boîte Postale 32, F-69131 Lyon-Ecully (FR)**

## Description

La présente invention concerne la fabrication de coussins, souples, étanches, ou articles similaires tels que citernes souples, containers,... du type comportant une paroi latérale cylindrique et deux fonds, solidarisés de manière étanche avec chaque extrémité de al paroi latérale, ledit coussin devant résister à des pressions internes élevées.

Elle concerne également une installation pour la mise en oeuvre dudit procédé.

Jusqu'à ce jour, pour la réalisation de coussins du type précité, deux solutions ont été utilisées.

Dans la première on dispose la paroi latérale cylindrique, couramment désignée par l'expression «tour», expression que l'on adoptera dans la suite de la description, à l'intérieur d'un cylindre, servant en quelque sorte de gabarit, dont les dimensions internes correspondent sensiblement aux dimensions de l'article à réaliser, et l'on rabat les bords du tour vers l'extérieur en haut et en bas du cylindre, puis cela étant fait, on solidarise par soudure ou collage, les deux fonds sur ces bords ainsi rabattus.

Cette technique est couramment utilisée pour la confection de tous les objets gonflables réalisés à partir d'un film à base de P.V.C.

Si cette technique est facile à mettre en oeuvre, et permet d'enlever facilement le coussin formé après soudure des fonds de l'intérieur du cylindre servant de gabarit, elle présente cependant de nombreux inconvénients. Parmi ceux-ci, on peut citer le fait qu'elle implique obligatoirement l'utilisation d'une matière fortement déformable, telle qu'un film de P.V.C., et surtout le fait que les soudures des deux fonds sont faites dans le mauvais sens. Par suite, lorsque l'on envoie de l'air à l'intérieur du coussin, ces soudures travaillant à l'arrachement, on est limité au point de vue pression interne que peut supporter cet article.

La seconde solution utilisée pour la réalisation de coussins étanches, résistant à des pressions internes, consiste à replier vers l'intérieur les bords extrêmes des tours et à solidariser les deux fonds sur les bords ainsi repliés.

Dans ce cas, pour poser les deux fonds, on se trouve dans l'obligation de plisser les bords repliés, et même, par moment, de faire des entailles afin de résorber au maximum les plis.

Cependant, du fait de la formation de ces plis ou de ces entailles, l'ensemble réalisé n'est pas parfaitement étanche et cela implique obligatoirement de rapporter des bandes de matière supplémentaire en-dessus et en-dessous de la zone de jonction. Dans ce cas, la liaison est bien réalisée dans le bon sens et permet d'avoir une pression interne relativement importante mais l'opération de montage est coûteuse et complexe, étant donnée que l'on ne peut pas envisager d'effectuer les diverses opérations mécaniquement.

Par ailleurs, du fait de la formation des plis, la liaison des différents éléments ne peut pas être réalisée en utilisant la technique de soudure par haute fréquence.

L'US-A-3 671 349 décrit une technique permettant de réaliser des sacs en matière plastique comportant un fond rapporté à une extrémité d'une paroi tubulaire et destinés à être disposés à l'intérieur de containers utilisés pour le transport de liquides, poudres ou matériaux similaires. Selon ce document, la mise en place du fond est obtenue en introduisant à l'intérieur du tube destiné à former la paroi un élément de conformation comportant une couronne gonflable, de telle sorte que l'extrémité du tube soit retournée vers l'intérieur et le fond rapporté contre cette partie. On obtient ainsi une liaison dans le bon sens mais, en revanche, il n'est pas possible de rapporter, d'une manière similaire, un second fond à l'autre extrémité.

L'US-A-3 753 819 décrit, quant à lui, un procédé permettant l'obtention de coussins souples étanches du type comportant une paroi latérale et deux fonds solidarisés de manière étanche avec chaque extrémité de la paroi. Selon le procédé, il est ménagé une ouverture dans la paroi afin de permettre l'introduction d'un élément de conformation, laquelle est ensuite refermée après la solidarisation des fonds avec la paroi cylindrique.

Ce procédé utilisé pour fabriquer des matelas remplis d'eau implique pour sa mise en oeuvre de plisser en accordéon la paroi et de rapporter les deux fonds simultanément. Il n'est donc pas possible d'envisager de l'utiliser pour réaliser des coussins dont la hauteur est inférieure au diamètre des fonds. De plus, le retournement vers l'intérieur des bords du tube ne peut pas être réalisé avec précision, des plis pouvant se former.

Or, on a trouvé, et c'est ce qui fait l'objet de la présente invention, un procédé simple et efficace permettant de réaliser mécaniquement, pratiquement sans opération manuelle, des coussins souples, étanches, du type précité, résistant à des pressions internes.

D'une manière générale, le procédé selon l'invention pour la réalisation de coussins souples, étanches, résistant à des pressions internes, du type comportant une paroi latérale cylindrique et deux fonds solidarisés de manière étanche avec chaque extrémité de ladite paroi latérale, consiste:

— à confectionner dans une matière souple, résistante, légèrement extensible, un cylindre ouvert à ses deux extrémités et destiné à former ladite paroi latérale,

— à ménager une ouverture sur une partie de la hauteur dudit cylindre,

— à introduire par l'ouverture à l'intérieur de la paroi un élément de conformation permettant de rapporter et solidariser les fonds à chaque extrémité de ladite paroi latérale,

— à refermer l'ouverture après solidarisation des fonds avec la paroi cylindrique et enlèvement de l'élément de conformation,
et se caractérise par le fait que:

— le cylindre destiné à former la paroi latérale a une circonférence qui est légèrement inférieure à la circonférence des fonds à rapporter;

— l'élément conformateur introduit à l'intérieur du cylindre formant la paroi latérale du coussin à réaliser est tel qu'il permet de provoquer l'élargissement dudit cylindre dans une zone de faible largeur proche des extrémités, cette zone étant distante de ces dernières d'une longueur D égale à la largeur de la couronne de contact entre les fonds et la partie de la paroi latérale qui est alors recourbée vers l'intérieur, cela étant obtenu à l'aide de moyens élargisseurs extensibles constitués d'une plaque extensible ayant deux secteurs circulaires pouvant être écartés l'un de l'autre et au moins un secteur complémentaire adaptable entre les deux secteurs circulaires et définissant avec ces derniers lorsqu'il est mis en place un cercle de circonférence égale à la circonférence du fond à rapporter;

— le cylindre reprend ses dimensions d'origine dans la zone élargie après avoir rapporté et solidarisé les fonds à chaque extrémité de la paroi latérale.

Or, on a constaté qu'en provoquant l'élargissement du cylindre formant la paroi latérale du coussin, dans une zone de faible largeur, proche de ses extrémités, que ces dernières se trouvaient rabattues vers l'intérieur, sans former de plis, ce qui permet de rapporter les fonds facilement et, avantageusement, d'effectuer la solidarisation desdits fonds en utilisant la technique de soudure par haute fréquence.

En général, pour la mise en oeuvre de l'invention, on procède en deux phases séparées pour la mise en place et la solidarisation de chaque fond, mais éventuellement, cela pourrait être réalisé en une seule opération.

L'invention concerne également un dispositif pour la mise en oeuvre du procédé, ce dispositif comprenant un élément de conformation introduit à l'intérieur du cylindre constituant la paroi latérale du coussin à réaliser et agissant dans une zone de faible largeur située au voisinage des extrémités du cylindre afin de provoquer un élargissement circonférentiel, ce dispositif étant caractérisé en ce que l'élément de conformation est constitué essentiellement par une plaque extensible, rigide, de faible épaisseur, de l'ordre de quelques millimètres, cette plaque étant constituée de deux secteurs circulaires pouvant être écartés l'un de l'autre et d'au moins un secteur complémentaire, adaptable entre les deux secteurs précités, et définissant avec ces derniers, lorsqu'il est mis en place, un cercle de circonférence égale à la circonférence du fond à rapporter.

En d'autres termes, on peut dire que l'un des points qui caractérisent le procédé et le dispositif selon l'invention réside dans le fait que l'élément de conformation peut prendre deux configurations, l'une lors de la mise en place étant telle que les dimensions de ces moyens élargisseurs soient inférieures au périmètre du cylindre constituant la paroi latérale, l'autre étant telle que les dimensions des moyens élargisseurs soient supérieures au périmètre de la paroi latérale lors de l'opération de mise en place des fonds.

Certes, il avait été proposé, notamment dans le brevet britannique n° 763 254 de I.C.I. ainsi que dans les brevets allemands 1 062 004 de KIMMANDIT et 1 121 312 de KOLB, ainsi que dans l'US-A-3 671 349 cité dans le préambule, de réaliser des sacs comportant une paroi latérale cylindrique et un fond rapporté à une extrémité de cette paroi en utilisant une technique selon laquelle lors de la mise en place du fond, la paroi cylindrique est maintenue par l'une de ses extrémités au moyen d'un élément dont le diamètre est supérieur au diamètre de la paroi. Cela provoque le retournement de l'extrémité sur cet élément et le fond est rapporté sur ce bord ainsi retourné.

Si un phénomème similaire est utilisé pour la mise en oeuvre du procédé selon l'invention, il faut cependant constater que, contrairement l'art antérieur, l'élargissement du cylindre constituant la paroi est réalisé au moyen d'un élément élargisseur extensible. Cela permet d'introduire facilement l'élément élargisseur à l'intérieur du tube, chose qui n'est pas possible avec les dispositifs des documents antérieurs.

De plus, s'il est possible avec les techniques antérieures de rapporter un fond à l'extrémité d'un tube cylindrique il est matériellement impossible de rapporter, de la même manière, un deuxième fond de l'autre côté. En effet, le premier fond étant rapporté, on ne peut pas réintroduire dans les techniques antérieures un élément élargisseur à l'intérieur du tube étant donné que ces éléments sont portés par un bâti vertical et que, surtout, aucune ouverture n'est aménagée soit sur une partie de la hauteur du cylindre soit sur l'un des fonds pour permettre l'introduction de l'élément élargisseur. Même si cette éventualité pouvait être envisagée, du fait que les éléments élargisseurs de l'art antérieur ne sont pas extensibles, il aurait été pratiquement impossible de les mettre en place dans le cas de matières résistantes telles que celles utilisées pour la réalisation de coussins souples, étanches. Enfin, il n'est pas envisageable, contrairement à l'invention, de pouvoir réaliser avec de tels dispositifs des coussins présentant une hauteur inférieure à leur diamètre. Or, cela est possible avec le procédé et le dispositif selon l'invention.

L'invention et les avantages qu'elle apporte seront cependant mieux compris grâce à l'exemple de réalisation donné ci-après et qui est illustré par les schémas annexés dans lesquels:

— la figure 1 illustre schématiquement les divers éléments constituant un coussin conforme à l'invention,

— la figure 2 montre schématiquement la paroi latérale cylindrique d'un tel coussin avant sa réalisation,

— les figures 3 à 18 sont des vues détaillées d'une installation permettant la mise en oeuvre du procédé selon l'invention, les figures 3 à 7 montrant plus particulièrement les moyens permettant l'élargissement de la paroi latérale; les figures 8 à 16 la manière dont de tels moyens sont utilisés pour la mise en place des fonds, la figure 17 illustrant schématiquement un dispositif permettant la soudure par haute-fréquence desdits fonds, et la figure 18 un dispositif permettant la fermeture de l'ouverture pratiquée dans la paroi latérale.

Dans la suite de la description, l'invention sera décrite pour la réalisation d'un coussin gonflable, utilisable notamment comme cric pour véhicule, et qui présente une fois terminé, la caractéristique suivante:

— diamètre des fonds: 500 millimètres,
— hauteur: 425 millimètres,
— matière: tissu à base de polyester enduit de P.V.C. pesant 700 grammes par mètre carré; ce tissu, réalisé de manière conventionelle, comporte 9 fils par centimètre à la fois en chaîne et en trame, ces fils étant constitués d'un fil polyester de 1100 déci-tex.

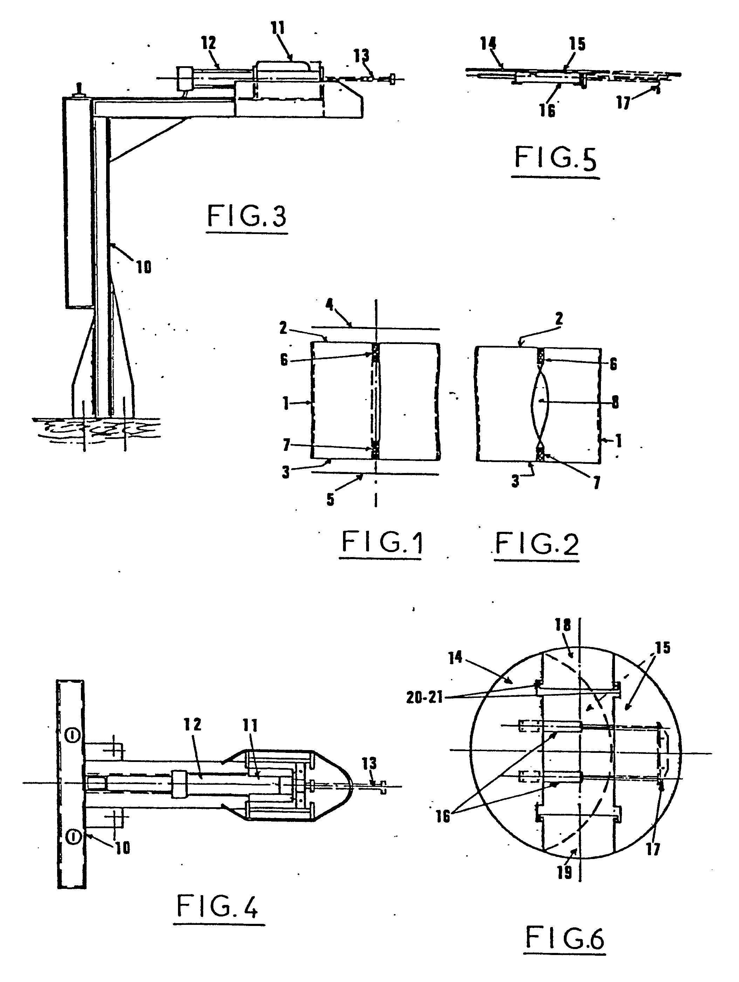

Conformément au procédé selon l'invention, et ainsi que cela est représenté plus en détail aux figures 1 et 2, à partir du tissu enduit précité, on confectionne la paroi latérale 1 en formant un cylindre ouvert à ses deux extrémités 2, 3, ce cylindre ayant une circonférence légèrement inférieure à la circonférence des fonds 4, 5 à rapporter.

Dans le cas présent, pour l'application désirée, qui est celle des crics gonflables, la longueur de la bande de tissu constituant la paroi latérale 1 est inférieure de 6% à la circonférence des fonds 4, 5. Il est évident que le pourcentage sera variable selon la nature et la résistance de la matière utilisée et devra toujours être inférieure à la limite de retour élastique.

Avec cette bande, on forme, comme déjà dit, un cylindre que l'on soude ses deux extrémités 6,7 sur une longueur d'environ 40 millimètres, de manière à laisser un jour ou ouverture 8, sur une partie de la hauteur de cylindre. .

Eventuellement, dans le cas où l'on désire réaliser des coussins de faible hauteur, la partie latérale cylindrique sera soudée sur toute sa longueur et l'on formera une ouverture sur l'un des fonds 4 ou 5. Par ailleurs, il est possible, sans sortir du cadre de l'invention, d'utiliser une matière tubulaire par elle-même, auquel cas l'opération de soudure est supprimée et est remplacée par la découpe selon une régénératrice du cylindre sur une partie de se hauteur.

Dans le cas présent, on utilise pour constituer la paroi latérale cylindrique une bande de tissu de hauteur 475 millimètres dont on soude les deux bords extrêmes 6-7 sur une hauteur de 40 millimètres. On obtient donc un cylindre présentant une ouverture 8 de 395 millimètres.

Conformément à l'invention, lors de la mise en place des fonds 4, 5, on provoque l'élargissement du cylindre 1 dans une zone de faible largeur proche des extrémités 2, 3 et distante de ces dernières d'une longueur D égale à la longueur désirée de solidarisation avec les fonds.

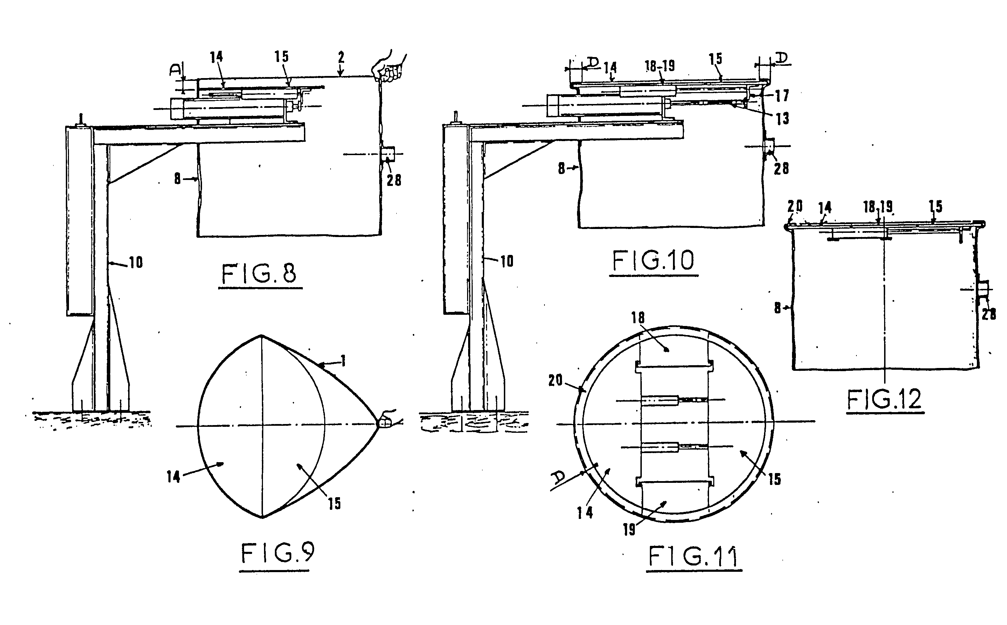

Cet élargissement est réalisé conformément à l'invention grâce à l'installation illustrée par les figures 3 à 7 et dont la mise en oeuvre est illustrée par les figures 8 à 16.

Cette installation est constituée essentiellement d'un bâti 10, en forme de potence, supportant essentiellement un vérin 11 constitué d'un corps fixe 12 et d'une tige mobile 13. Cet ensemble est illustré respectivement en vue de côté et vue de dessus aux figures 3 et 4.

Par ailleurs, comme moyen élargisseur on utilise une plaque extensible, telle que celle illustrée aux figures 5 et 6, respectivement en vue de côté et vue de dessus, cette plaque extensible, de préférence à base d'aluminium, ayant une faible épaisseur. Elle est formée, conformément à l'invention de deux secteurs circulaires 14, 15, mobiles l'un par rapport à l'autre. Ces secteurs sont montés sur un support commun 16, l'un 14 étant fixe sur ce support, et l'autre 15, pouvant coulisser.

Le support 16 est adaptable de manière amovible, par tous moyens de système d'accrochage rapide, sur le corps du vérin 11. Par ailleurs, le second secteur circulaire 15 déplaçable par rapport au secteur 14, comporte à sa partie inférieure des moyens, tels qu'une butée 17, qui viennent en contact avec l'extrémité de latige 13 du vérin et sont repoussés par cette dernière.

L'ensemble, en fonctionnement normal, se trouve monté tel que cela est illustré à la figure 7. Sur les figures 3 et 5, ont été représentées, en pointillés, les positions extrêmes des deux secteurs circulaires 14, 15, alors qu'à la figure 6 le secteur 15 est représenté dans sa position écartée, en traits pleins, et en pointillés, lorsqu'il est juxtaposé avec le secteur 14.

Ainsi que cela est visible sur la figure 6, la plaque extensible constituée des deux secteurs 14 et 15 est, lorsque ces deux secteurs sont écartés l'un de l'autre, associée avec des secteurs complémentaires 18, 19, adaptables entre les deux secteurs 14, 15 et qui définissent avec ces derniers, un cercle dont la circonférence est égale à la circonférence des fonds à rapporter.

Dans l'exemple de réalisation conforme à l'invention, la plaque provoquant l'élargissement de la paroi latérale cylindrique est constituée par une plaque d'aluminium de 5 millimètres d'épaisseur, obtenue à partir d'un rond de 500 millimètres de diamètre, dans lequel, et dans la partie centrale, on a enlevé une bande de 170 millimètres. Cette bande de 170 millimètres a été découpée en deux secteurs complémentaires 18, 19, qui peuvent s'adapter entre les deux secteurs 14, 15 par l'intermédiaire des rainures et butées 20, 21. Par suite, lorsque les deux secteurs 14, 15 sont rapprochés l'un de l'autre, ils forment un ensemble sensiblement oval, dont l'une des dimensions est égale à 470 millimètres et l'autre à 330 millimètres.

Lors de la mise en oeuvre, conformément à l'invention, et ainsi que cela est illustré par les figures 8 à 12, on enfile le cylindre constituant la paroi latérale 1 du coussin à réaliser, par l'intermédiaire de son ouverture 8 pratiquée sur une partie de sa hauteur, ouverture qui, dans le cas présent, a 395 millimètres de longueur, sur la plaque extensible 14, 15 (voir figure 9) qui à été montée sur le corps du vérin 11. Les plaques 14, 15 sont positionnées, par rapport au bord supérieur 2 du cylindre 1, à une distance D égale à la longueur désirée de solidarisation avec le fond.

Dans le cas présent, cette longueur D est de 25 millimètres. Cela étant fait, on provoque la mise en route du vérin 11 et le déplacement de sa tige 13 provoque le coulissement de la plaque 15 par rapport à la plaque 14 (voir figure 10), de telle sorte que lesdites plaques 14, 15 reforment un rond de 500 millimètres. Dans l'intervalle entre les deux plaques 14, 15 (voir figure 11), on intercale alors des deux secteurs complémentaires 18, 19 et l'on obtient alors un rond parfait de 500 millimètres.

On constate, que la partie 20 de l'élément tubulaire correspondant à la distance D, se trouve rabattu sur la plaque support constituée par les éléments 14, 15, 18, 19 et ce, de manière parfaite et sans pli.

L'extension provoquée correspond à une élasticité naturelle de la matière utilisée et se fait sans détérioration de cette matière. Les plaques intercalaires 18, 19 ayant été mise en place, on peut alors relâcher le vérin, les plaques étant maitenues par la pression exercée par l'élément tubulaire. L'ensemble peut alors être enlevé (figure 12) du bâti 10 portant le vérin. Cela étant fait, on peut donc souder le fond sans aucune difficulté. Ce montage du fond peut se faire soit par collage, soit de préférence par soudage par haute fréquence ou par tout autre procédé.

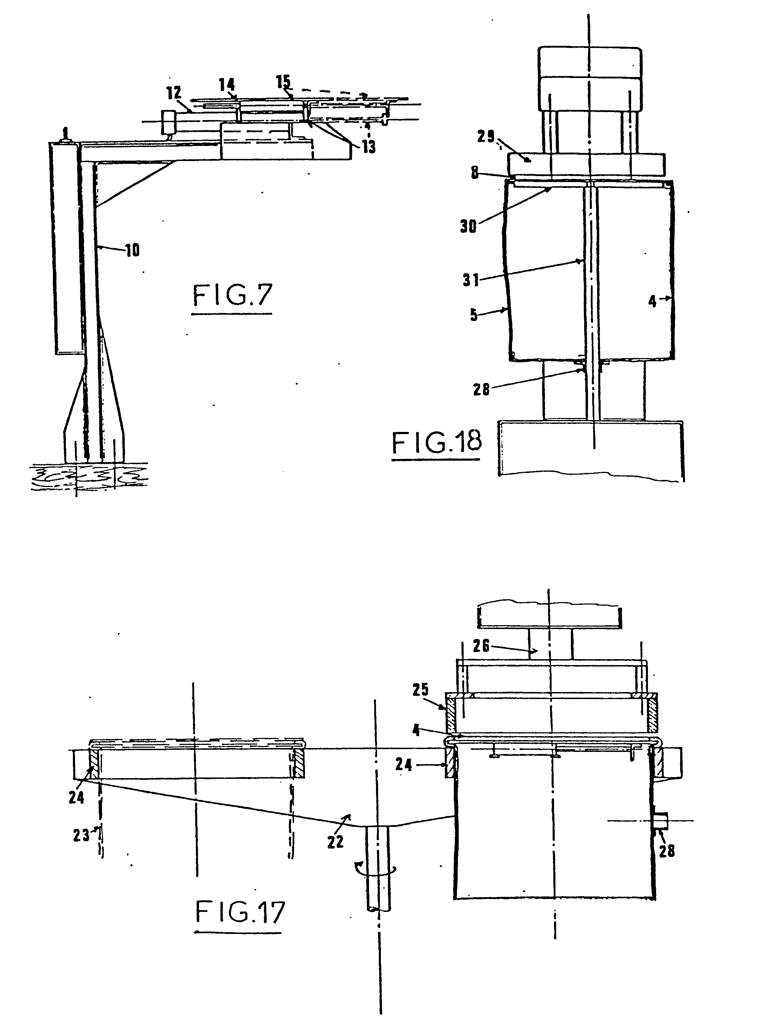

Ainsi que cela est représenté à la figure 17, la mise en place du fond 4 peut être réalisée facilement par haute fréquence.

Le dispositif illustré par cette figure 17 comporte essentiellement un ensemble formant tourniquet 22, sur lequel peuvent être mis en attente, les éléments tubulaires préparés comme indiqué précédemment, éléments 23 représentés en pointillés sur cette figure et qui reposent sur une contre-électrode 24 en forme de couronne ayant le diamètre du fond 4 à rapporter.

Par rotation du torniquet 22, on amène l'ensemble à souder en regard d'une électrode mobile 25, montée sur une presse conventionnelle 26 et l'on provoque la soudure. L'ensemble ainsi soudé est ensuite enlevé afinde pouvoir apposer le deuxième fond 5.

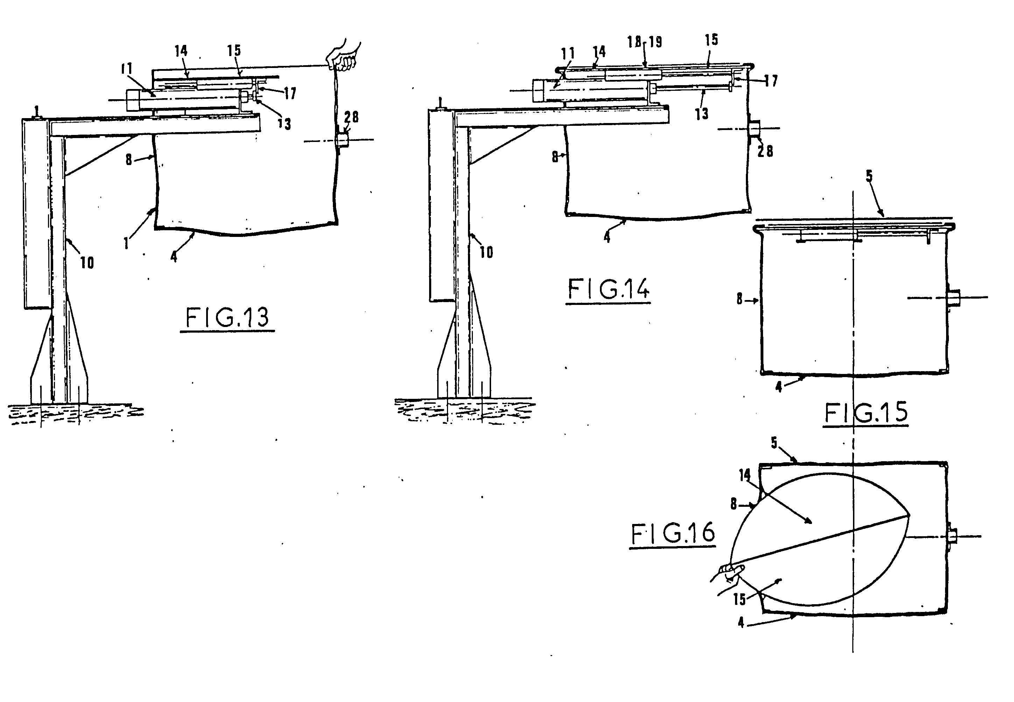

Le montage de ce deuxième fond est réalisé de manière similaire au premier, tel que cela est représenté aux figures 13, 14, 15. Il est donc inutile de le décrire en détail.

Lorsque ce fond 5 a été mis en place et soudé, les plaques 14, 15 peuvent être enlevées facilement grâce à l'ouverture 8 prévue sur la partie tubulaire. Eventuellement, dans le cas de coussins de faible épaisseur, l'ouverture est prévue non pas sur la partie tubulaire, mais sur l'un des fonds 4 ou 5.

Il ne reste donc plus qu'à réaliser la fermeture de l'ouverture 8. Etant donné que la confection d'un coussin étanche suppose dans tous les cas, un dispositif d'introduction de l'air tel qu'une valve 28, cette fermeture peut être réalisée de manière très simple.

Un tel mode de fermeture est illustré par la figure 18. Dans ce mode de réalisation, on utilise également un dispositif de soudure par haute-fréquence comportant une électrode 29 et une contre-électrode 30. Pour réaliser la fermeture, on utilise une contre-électrode 30 montée amovible ou pivotante à l'extrémité d'un support 31, la longueur de cette contre-électrode 30 étant supérieure à la longueur de l'ouverture à fermer et sa section étant plus faible que la section de l'ouverture prévue pour la valve 28. Par suite, pour effectuer la fermeture, on rentre le support 31, ainsi que la contre-électrode 30 au travers de l'orifice 28 de la valve, puis étant donné que le coussin formé est souple, on positionne à la main la contre-électrode 30 au regard de l'ouverture à fermer, et on effectue la fermeture soit comme dans cet exemple par soudage haute-fréquence, soit éventuellement par collage. Cela étant fait, le retrait de l'électrode 30 et du support 31 est également effectué au travers de l'orifice 28.

Grâce à l'invention, on obtient de manière simple et mécanisée des coussins étanches, souples, résistant à des pressions intérieures importantes. De plus, l'étanchéité est parfaite, étant donné que le montage des fonds s'effectue sur des toiles ne présentant aucun pli, ce qui par ailleurs, permet d'éviter de mettre des bandes de renfort en-dessous et endessus des zones de jonction.

Un tel procédé peut être mis en oeuvre par une main-d'oeuvre non spécialisée vue sa simplicité.

Par ailleurs, comme dit précédemment, on peut également confectionner de cette manière des coussins présentant une hauteur nettement inférieure au diamètre des fonds. Par exemple, pour un coussin dont la hauteur serait de 250 millimètres pour un diamètre de 500 millimètres, on pratiquera l'ouverture pour la sortie de la plaque, non pas dans la paroi latérale cylindrique, mais dans un fond.

Comme dit précédemment, la résistance de tels coussins est très grande étant donné que les soudures de montage des fonds sont réalisées dans le bon sens, c'est-à-dire parallèles au sens des efforts de traction. Cependant, dans certains cas, si l'on désire encore améliorer la résistance, il est possible d'adjoindre également une bande intérieure ou extérieure de renfort, lors du montage.

De plus, outre le gain de temps que permet un tel mode de réalisation par rapport à la technique manuelle antérieure, gain de temps qui peut être chiffré au moins à trois, un tel procédé permet d'utiliser une technique de soudure par haute fréquence, puisque la toile ne comporte aucun pli lors de la mise en place de fonds.

Il est bien entendu que l'invention couvre toutes les variantes réalisées dans le même esprit et qu'elle peut être utilisée pour réaliser des coussins de dimensions supérieures ou inférieures à l'exemple donné.

Par ailleurs, il peut être envisagé d'effectuer la mise en place simultanée des deux fonds en utilisant par exemple un dispositif comportant deux systèmes à plaques extensibles, montées sur un même support, fontionnant en synchronisme.

Enfin, cette technique peut également être utilisée pour d'autres applications par exemple pour rapporter une colorette dans la zone médiane de la partie cylindrique. Dans ce cas, on provoque la déformation dans cette zone et la colerette peut également être mise en place et solidarisée facilement par soudure haute fréquence ou autres procédés.

## Revendications

1. Procédé pour la réalisation de coussins souples, étanches, résistant à des pressions internes, du type comportant une paroi latérale cylindrique (1) et deux fonds (4), (5) solidarisés de manière étanche avec chaque extrémité (2)-(3) de ladite paroi latérale, qui consiste:

— à confectionner dans une matière souple, résistante, légèrement extensible, un cylindre ouvert à ses deux extrémités (2-3) et destiné à former ladite paroi latérale,

— à ménager une ouverture (8) sur une partie de la hauteur dudit cylindre (1),

— à introduire par l'ouverture (8) à l'intérieur de la paroi un élément de conformation permettant de rapporter et solidariser les fonds (4), (5) à chaque extrémité (2-3) de ladite paroi latérale,

— à refermer l'ouverture (8) après solidarisation des fonds avec la paroi cylindrique et enlèvement de l'élément de conformation,

caractérisé par le fait que:

— le cylindre (1) destiné à former la paroi latérale a une circonférence qui est légèrement inférieure à la circonférence des fonds (4), (5) à rapporter;

— l'élément conformateur introduit à l'intérieur du cylindre (1) formant la paroi latérale du coussin à réaliser et tel qu'il permet de provoquer l'élargissement dudit cylindre dans une zone de faible largeur proche des extrémités (2-3), cette zone étant distante de ces dernières d'une longueur D égale à la largeur de la couronne de contact entre les fonds (4) et (5) et la partie de la paroi latérale qui est alors recourbée vers l'intérieur, cela étant obtenu à l'aide de moyens élargisseurs extensibles constitués d'une plaque extensible ayant deux secteurs circulaires (14)-(15) pouvant être écartés l'un de l'autre et au moins un secteur complémentaire (18-19) adaptable entre les deux secteurs circulaires et définissant avec ces derniers lorqu'il est mis en place un cercle de circonférence égale à la circonférence du fond à rapporter;

— le cylindre reprend ses dimensions d'origine dans la zone élargie après avoir rapporté et solidarisé les fonds (4) et (5) à chaque extrémité (2-3) de la paroi latérale (1).

2. Procédé selon la revendication 1, caractérisé par le fait que la mise en place et la solidarisation des fonds (4), (5) sont réalisées en deux phases séparées.

3. Dispositif pour la mise en oeuvre du procédé selon l'une des revendications 1 et 2, comprenant un élément de conformation introduit à l'intérieur du cylindre constituant la paroi latérale (1) du coussin à réaliser et agissant dans une zone de faible largeur située au voisinage des extrémités (2-3) du cylindre afin d'y provoquer un élargissement circonférentiel, caractérisé en ce que l'élément de conformation est constitué par une plaque extensible, rigide, de quelques millimètres d'épaisseur, cette plaque étant constituée de deux secteurs circulaires (14), (15) pouvant être écartés l'un de l'autre et d'au moins un secteur complémentaire (18), (19) adaptable entre les deux secteurs précités (14), (15) et définissant avec ces derniers, lorqu'il est mis en place, un cercle de circonférence égale à la circonférence du fond à rapporter.

4. Dispositif selon la revendication 3, caractérisé en ce qu'il est constitué d'un bâti (10) en forme de potence, supportant essentiellement un vérin (11) constitué d'un corps fixe (12) et d'une tige mobile (13) et d'une plaque extensible constituée de deux secteurs circulaires (14), (15), mobiles l'un par rapport à l'autre, montés sur un support commun (16), l'un (14) étant fixe sur ce support, et l'autre (15) pouvant coulisser, le support (16) étant adaptable, de manière amovible, sur le corps du vérin (11) et le second secteur (16) comportant avec l'extrémité (13) de la tige du vérin et étant repoussés par cette dernière, des secteurs complémentaires (18), (19) étant adaptables entre les deux secteurs (14)-(15) et définissant avec ces derniers un cercle dont la circonférence est égale à la circonférence des fonds (4), (5) à rapporter.

**Patentansprüche**

1. Verfahren zur Herstellung von nachgiebigen, dichten, gegen Innendrücke beständigen Kissen, die eine zylindrische Seitenwand (1) und zwei Abschlussplatten (4), (5) aufweisen, die dicht mit jedem Ende (2)-(3) der Seitenwand verbunden sind, welches darin besteht,

— dass aus einem widerstandsfähigen, leicht dehnbaren, elastischen Material ein an seinen Enden (2-3) offener Zylinder gefertigt wird, der dazu bestimmt ist, die Seitenwand zu bilden,

— dass über einen Teil der Höhe des Zylinders (1) eine Öffnung (8) ausgespart wird,

— dass durch die Öffnung (8) ein Formgebungselement ins Innere der Wandung eingeführt wird, welches das Einsetzen und Verbinden der Abschlussplatten (4), (5) an jedem Ende (2-3) der Seitenwand ermöglicht,

— dass nach dem Verbinden der Abschlussplatten mit der zylindrischen Wandung und dem Herausnehmen des Formgebungselements die Öffnung (8) geschlossen wird,
dadurch gekennzeichnet, dass

— der Zylinder (1), der zur Bildung der Seitenwand bestimmt ist, einen Umfang hat, der etwas kleiner ist, als der Umfang der anzubringenden Abschlussplatten (4), (5);

— das Innere des die Seitenwand des herzustellenden Kissens bildenden Zylinders (1) eingeführte Formgebungselement so beschaffen ist, dass es ein Aufweiten des Zylinders in einer Zone geringer Breite in Nähe der Enden (2-3) ermöglicht, die von diesen Enden einen Abstand von einer Länge D hat, die der Breite des Berührungsbereichs zwischen den Abschlussplatten (4) und (5) und dem Teil der Seitenwand entspricht, der dann nach innen umgebogen wird, was mit Hilfe von erweiterbaren Aufweitmitteln erreicht wird, die aus einer erweiterbaren Platte gebildet sind, welche zwei auseinanderspreizbare Kreissektoren (14)-(15) aufweist und mindestens einen Ergänzungssektor (18)-(19), der zwischen die beiden Kreissektoren einpassbar ist und mit diesen, wenn er eingesetzt ist, einen Kreis mit einem Umfang bildet, der gleich dem Umfang der anzubringenden Abschlussplatte ist;

— der Zylinder seine ursprünglichen Abmessungen in der erweiterbaren Zone wieder annimmt, nachdem die Abschlussplatten (4) und (5) an jedem Ende (2-3) der Seitenwand (1) angebracht und befestigt sind.

2. Verfahren nach Anspruch 1, dadurch gekennzeichnet, dass das Einsetzen und das Verbinden der Abschlussplatten in zwei getrennten Arbeitsgängen durchgeführt wird.

3. Vorrichtung zur Durchführung des Verfahrens nach einem der Ansprüche 1 und 2, mit einem ins Innere des die Seitenwand (1) des herzustellenden Kissens bildenden Zylinders eingesetzten Formgebungselement, das in einer Zone geringer Breite in der Nähe der Enden (2-3) des Zylinders wirkt und dort eine Umfangserweiterung erzeugt, dadurch gekennzeichnet, dass das Formgebungselement gebildet ist, durch eine steife erweiterbare Platte von einigen Millimetern Dicke, welche aus zwei auseinanderspreizbaren Kreissektoren (14), (15) und mindestens einem Ergänzungssektor (18), (19) gebildet ist, der zwischen die beiden Sektoren (14), (15) einpassbar ist und mit diesen, wenn er eingesetzt ist, einen Kreis mit einem Umfang bildet, der gleich dem Umfang der anzubringenden Abschlussplatte ist.

4. Vorrichtung nach Anspruch 3, dadurch gekennzeichnet, dass sie gebildet ist aus einem galgenförmigen Gestell (10), das im wesentlichen eine Spreizvorrichtung (11) trägt, bestehend aus einem ortsfesten Körper (12), einer verschiebbaren Stange (13) und einer erweiterbaren Platte, die aus zwei Kreissektoren (14), (15) gebildet ist, von denen der eine gegenüber dem anderen verschiebbar ist und die auf einem gemeinsamen Träger (16) angeordnet sind, wobei der eine Kreissektor (14) auf dem Träger feststehend und der andere Kreissektor (15) verschiebbar ist und der Träger (16) durch Herausziehen auf dem Körper der Spreizvorrichtung (11) anpassbar ist, und der zweite Kreissektor (15) mit dem Ende (13) der Stange der Spreizvorrichtung zusammenhängend und durch diese verschiebbar ist, und dass Ergänzungssektoren (18), (19) zwischen den beiden Sektoren (14)-(15) einpassbar sind und mit diesen einen Kreis bilden, dessen Umfang gleich dem Umfang der anzubringenden Abschlussplatten (4), (5) ist.

**Claims**

1. Process for the manufacture of a flexible tight cushion resistant at internal pressures, of the type comprising a cylindrical lateral wall (1) and two bottoms (4), (5) bound of a tight manner with each end (2)-(3) of said lateral wall, said process consisting in:
— to manufacture in a strength, supple and slightly extensible matter, a cylinder open at its two ends (2)-(3), said cylinder forming the said lateral wall,
— to make an aperture (8) on a part of the height of said cylinder (1),
— to introduce through the aperture (8), inside the wall, a conformation element allowing to join and bind the bottoms (4)-(5) at each end (2)-(3) of said lateral wall,
— to close the aperture (8) after bounding of the bottoms with the cylindrical wall and extraction of the conformation element,
characterized by the fact that:
— the cylinder (1) forming the lateral wall has a circumference which is slightly less than the circumference of the bottoms (4) - (5) to be joint;
— the conformator element introduces inside of the cylinder (1) forming the lateral wall of the cushion to be realized is such that it allows to provoke the stretching of said cylinder in a zone of low width near of the ends (2)-(3), which zone being at a distance of the ends of a length D equal to the width of the contact annulus between the ends (4) and (5) and the part of the lateral wall which, then is bent towards the inside, such result being obtained with the aid of extensible tenter means constituted of an extensible plate having two cylindrical sectors (14)-(15) able to be separated one of the other and at least a complementary sector (18-19) adaptable between the two circular sectors and defining with said sectors, when it is in place a circle whose circumference is equal to the circumference of the bottom to be apply;
— the cylinder retake its original dimensions in the enlarged area after taking in place and bounding of the ends (4) and (5) at each end (2-3) of the lateral wall (1).

2. Process according the claim 1, characterized by the fact that the taking in place and the bounding of the bottoms (4)-(5) are realized in two separated phases.

3. Apparatus for the realization of the process according one of claims 1 and 2, comprising a conformation element introduces inside of the cylinder forming the lateral wall (1) of the cushion to be realize and acting in a low width zone near of the extremities (2)-(3) of said cylinder in order to create a circumferential enlargement characterized in that the conformation element is constituted of an rigid, extensible plate, the thick of which being of some millimetres, said plate being constituted of two circular sectors (14)-(15) able to be spaced one of another and of at least one complementary sector (18), (19) adaptable between the two precited sectors (14)-(15) and defining with them, when in place, a circle having a circumference equal to the circumference to the end to be bound.

4. Apparatus according the claim 3, characterized in that it is constituted of a T shaped frame (10), said frame essentially supporting a jack (11) having a fixed body (12) and a displaceable stem (13) and of an extensible plate formed of two circular sectors (14)-(15), displaceable one each one another, mounted in a commun support (16), one (14) being fixed on this support and the other (15) being able to slide, the support (16) being adaptable of removable manner, on the body of the jack (11) and the second sector (16) having with the extremity (13) of the jack stem and being pushed by this stem, complementary sectors (18)-(19) being adaptable between the two sectors (14)-(15) and defining with them a circle the circumference of which is equal to the circumference of the bottoms (4)-(5) to be fixed.

FIG.3

FIG.5

FIG.1    FIG.2

FIG.4

FIG.6

FIG.8

FIG.9

FIG.10

FIG.11

FIG.12

FIG.13

FIG.14

FIG.15

FIG.16

0 043 333

FIG.7

FIG.18

FIG.17